# DEMANDE DE BREVET EUROPEEN

(11) **EP 3 459 875 A1**
(43) Date de publication de la demande: **27.03.2019**
(21) Numéro de dépôt: 18192508.2
(22) Date de dépôt: 04.09.2018
(51) Int. Cl.: B65D 88/68, B65G 65/46, B65G 69/14

(54) **SYSTEME D'ALIMENTATION DE POUDRES**

(30) Priorité: 20.09.2017 FR 1758693
(71) Demandeur: Commissariat à l'Energie Atomique et aux Energies Alternatives, 75015 Paris (FR)
(72) Inventeur: VANNESTE-IBARCQ, Clément, 64400 SAUCEDE (FR); GONZALEZ MARTINEZ, Maria, 32786 CHANDREXA DE QUEIXA-OURENSE (ES); MELKIOR, Thierry, 38360 SASSENAGE (FR)
(74) Mandataire: Nony

(57) **Abrégé**

L'invention concerne un système (1) d'alimentation en poudre en phase dense comportant :
- une paroi d'injection (2) par gravité de la poudre, sous la forme d'un tronc de cône,
- au moins un dispositif de de raclage (3) de la paroi comprenant :
•une pluralité de plaques (30) fixées à un lien flexible continu (31) ;
•deux roues (32, 33) dont au moins une (32) d'entraînement en rotation depuis l'extérieur de la paroi d'injection, autour desquelles le lien flexible continu est enroulé pour être entraîné, les roues étant agencées au moins en partie à l'intérieur du cône d'injection; de sorte que lorsque la roue d'entraînement est mise en rotation, les plaques entraînées par le lien flexible puissent venir racler au moins en partie la paroi et casser les voûtes de poudre injectée, susceptibles de se former sur la hauteur du cône d'injection entre l'intérieur de ce dernier et la paroi.

## Description

### Domaine technique

La présente invention concerne le domaine des systèmes d'alimentation en poudres, plus précisément de poudres en phase dense, c'est-à-dire avec peu ou pas de gaz porteur.

Elle concerne en particulier les poudres cohésives, telles que les poudres de bois, c'est-à-dire qu'elles ont une tendance naturelle à former spontanément des arches et/ou des voûtes.

L'invention a trait plus particulièrement à une application d'alimentation, de contenants pressurisés ou non, en poudres de charge de matière carbonée, telle que la biomasse, le charbon ou tout autre type de poudres comme un broyat de déchets... Les contenants à alimenter peuvent être avantageusement, des réacteurs de gazéification, ou d'autres systèmes de conversion thermochimique. Dans cette application, les débits massiques de solide peuvent être très variables, depuis quelques kilogrammes jusqu'à plusieurs tonnes par heure en conditions industrielles.

L'invention vise à améliorer de tels systèmes d'alimentation de poudres, notamment en brisant systématiquement toute arche ou voûte de poudre susceptible de se produire au sein d'un cône d'injection.

Bien que décrite en référence principalement à l'application avantageuse d'injection de poudres de biomasse, l'invention peut s'appliquer à tout type de poudres dont on connait les propriétés physiques et mécaniques (granulométrie, densité, taux d'humidité, angle d'avalanche...).

### Art antérieur

Dans le domaine de l'alimentation en poudres de contenants divers et variés, on peut distinguer deux grandes catégories de dispositifs connus, ceux ayant une fonction de dosage des poudres, c'est-à-dire qui permettent de contrôler la quantité de poudre, et ceux servant à l'injection de poudres dans un contenant, en continu ou en discontinu.

Parmi les dispositifs de dosage répandus, on peut citer les dispositifs à vis, les écluses rotatives ou les sas de pressurisation, communément appelés « lock hoppers » en anglais. Par exemple, la demande de brevet WO2012/152742A1 divulgue une écluse rotative pour doser une poudre qui alimente directement depuis l'écluse un pétrisseur.

Ces dispositifs de dosage classiques s'appliquent aussi bien au domaine de la pharmacie ou de la chimie, qui nécessitent des faibles débits, comme par exemple décrit dans les brevets US 4850259 et US7984835B2, que dans le domaine de la manipulation industrielle de poudres à hauts débits. En particulier, le brevet US9227790B2 concerne une installation de gazéification de biomasse ou de charbon dans laquelle la poudre est convoyée par un convoyeur à vis hélicoïdal.

On rencontre également des sas de pressurisation, dont le volume plus ou moins important définit la finesse du dosage. Un avantage des écluses et des sas de pressurisation est qu'ils ont également un effet d'étanchéité vis-à-vis d'éventuelles fluctuations de pression en amont et en aval.

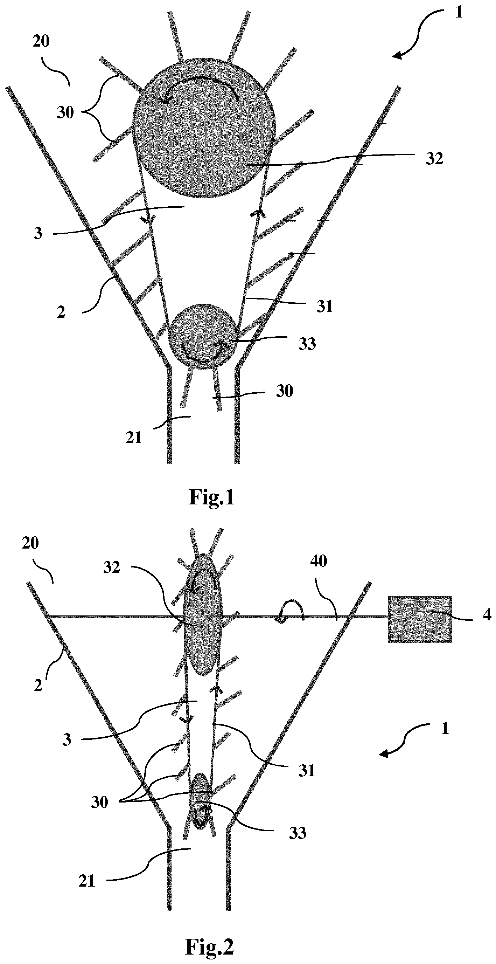

Le principal inconvénient des vis doseuses, écluses et lock hoppers est le caractère fortement discontinu du débit de poudre généré, comme cela est illustré en figure 1, où l'on voit que pour une écluse rotative connue, si l'on peut toujours définir un débit moyen constant, les variations de débit au cours du temps peuvent être importantes.

Jusqu'à présent, afin de pallier cet inconvénient, la solution consistait à agencer un grand nombre de dispositifs de dosage, soit en série fluidique avec un volume, donc un pas de débit, décroissant, par exemple des écluses rotatives avec un nombre croissants de godets de taille décroissante en allant vers le point d'injection, soit en parallèle, avec un dosage alterné de plusieurs dispositifs. Outre l'investissement et les contraintes de gestion du fonctionnement alterné, cette solution a pour inconvénient de générer un encombrement non négligeable. D'autre part, pour les poudres cohésives, des problèmes de bouchage dans les godets se produisent fréquemment.

Une autre solution connue, en particulier dans le domaine du convoyage et de la gazéification de poudre de charbon, consiste à contrôler le débit de solide par un débit additionnel de gaz : voir publications [1], [2]. Un convoyage avec gaz, aussi désigné par « injection aérée », a pour avantage de ne pas générer d'encombrement supplémentaire. En revanche, il génère un écoulement à phase fortement diluée, ce qui peut ne pas être compatible avec bon nombre de procédés en aval.

Cela est particulièrement problématique dans une installation de conversion thermochimique, dans laquelle le gaz ne participe pas à la réaction et de ce fait en diminue le rendement. Ceci peut être notamment pénalisant à haute pression, du fait de la densité accrue du gaz, qui augmente les ratios entre débit de masse du gaz et débit de masse solide. Par exemple, mettre en oeuvre un gaz de convoyage par dilution des particules de poudre dans une installation de gazéification de biomasse nécessiterait d'utiliser une partie de l'énergie de la réaction de gazéification pour réchauffer le gaz initialement froid, ce qui aurait pour effet indésirable de diminuer le rendement global de la réaction.

En ce qui concerne les dispositifs d'injection, on peut citer la littérature ancienne et fournie sur les silos de décharge. Ces éléments de type « entonnoir » en forme de tronc de cône permettent d'injecter un matériau granulaire dans un contenant plus petit. Par contre, ces entonnoirs, usuellement appelés cônes d'injection, n'ont pas pour fonction de doser le matériau granulaire et en assurent juste une décharge par gravité. Ainsi, dans ces dispositifs d'injection connus, la valeur du débit n'est pas réglable.

Un problème important que l'on rencontre systématiquement avec les entonnoirs/cônes d'injection est la création d'arches/voûtes de poudres.

Différents dispositifs d'aide à la décharge des cônes/entonnoirs, c'est-à-dire d'aide à l'écoulement des poudres au sein des cônes/entonnoirs, ont déjà été proposés. En particulier, on pourra se référer au paragraphe 12.2 de la publication [3].

On peut ainsi trouver différents dispositifs d'injection aérée par un gaz, décrits en détail dans la publication [2]. Mais, comme pour les dispositifs de dosage, ces dispositifs d'injection avec assistance pneumatique ne trouvent une application qu'en phase diluée avec une fraction volumique solide atteinte qui est de quelques %.

Un autre point pénalisant de ce type d'injection aéré est que les fonctions de dosage et d'injection de poudre ne sont pas séparées puisque c'est le mélange diphasique et donc le débit de gaz qui détermine en grande partie le débit de solide.

Enfin, pour des poudres très cohésives et/ou non aisément fluidisables, ce type d'injection est complexe à réaliser et très dépendant de la nature des poudres, comme expliqué par la publication [2], [3].

Différents dispositifs d'aide mécanique à la décharge de poudre dans un silo existent, qui sont référencés en particulier dans le paragraphe 12.3.2 de la publication [3]. Ces dispositifs mécaniques comprennent tous en un outil de décharge agencé soit au niveau de l'ouverture supérieure du silo, comme une vis sans fin, un injecteur à bandes ou vibrant..., soit dans le volume intérieur du silo ou sur ses parois, comme un agitateur, un ou plusieurs dispositifs de vibration mécanique...

Tous ces dispositifs mécaniques ne sont pas satisfaisants pour briser les arches/voûtes (dévoûtage) de poudre.

La demande de brevet US 2013/302117 propose un dispositif de dévoûtage de matériau pulvérulent au sein d'un silo de stockage de poudres, qui consiste en une pluralité de bras rotatifs qui s'étendent transversalement à l'arbre d'entraînement selon l'axe du silo en étant répartis le long dudit arbre. Ce dispositif n'est pas non plus satisfaisant. En effet, tout d'abord, les bras sont pas définition répartis ponctuellement, ce qui laisse des zones de la surface du silo qui ne sont pas concernées par le balayage des bras et qui sont donc potentiellement des zones dans lesquelles les arches/voûtes de matériau peuvent subsister. En outre, le volume occupé par les bras rotatif et leur arbre d'entraînement à l'intérieur du silo est très important et donc réduit la part du volume de stockage disponible pour le matériau.

La demande WO2015/113517 décrit un dispositif de dévoûtage constitué de roues munies de pâles flexibles à l'intérieur d'un silo de stockage de poudre, au moins une partie des roues en rotation étant en interférence mécanique avec une vis sans fin afin de casser les arches de poudre. L'inconvénient majeur de ce dispositif est que le dévoûtage ne peut être que partiel car le dispositif est localisé uniquement à proximité des parois du silo. Par conséquent, aucune cassure d'arches/voûtes ne se fait dans le volume du silo et plus particulièrement, les voûtes se formant selon la hauteur à l'intérieur dans le silo ne sont pas cassées.

Il existe donc un besoin d'améliorer les systèmes d'alimentation de poudres en phase dense, afin de s'affranchir des inconvénients précités des dispositifs d'aide à la décharge, notamment en permettant de casser/briser efficacement toute arche/voûte de poudres susceptible de se produire à l'intérieur d'un volume d'injection en vue d'améliorer l'écoulement.

Le but de l'invention est de répondre au moins en partie à ce besoin.

### Exposé de l'invention

Pour ce faire, l'invention concerne, sous un de ses aspects, un système d'alimentation en poudre en phase dense comportant :
- une paroi d'injection par gravité de la poudre, sous la forme d'un tronc de cône,
- au moins un dispositif de de raclage de la paroi comprenant :
   - une pluralité de plaques fixées à un lien flexible continu;
   - deux roues dont au moins une d'entraînement en rotation depuis l'extérieur de la paroi d'injection, autour desquelles le lien flexible continu est enroulé pour être entraîné, les roues étant agencées au moins en partie à l'intérieur du cône d'injection; de sorte que lorsque la roue d'entraînement est mise en rotation, les plaques entraînées par le lien flexible puissent venir racler au moins en partie la paroi et casser les voûtes de poudre injectée, susceptibles de se former sur la hauteur du cône d'injection entre l'intérieur de ce dernier et la paroi.

Par « paroi d'injection par gravité de la poudre », on comprend dans le cadre de l'invention, un écoulement gravitaire de la poudre par l'ouverture inférieure du tronc de cône en vue d'une injection directe dans un réacteur ou en vue d'un transfert depuis l'intérieur du cône qui peut ainsi constituer un cône de stockage.

Ainsi, l'invention consiste essentiellement à introduire un dispositif à plaques de raclage au sein même du volume délimité par le cône d'injection.

Les plaques de raclage mises en mouvement de balayage depuis l'extérieur par le biais de la roue d'entraînement et d'un arbre d'entraînement relié à un moteur externe, vont venir au plus près, voire balayer la paroi intérieure du cône d'injection, et ainsi casser/briser les arches ou voûtes qui se forment entre la poudre cohésive et la paroi intérieure du cône d'injection, afin d'améliorer l'écoulement de la poudre, et sans qu'il y ait besoin d'injecter un gaz.

Comparativement aux dispositifs d'aide à la décharge mécanique ou pneumatique selon l'état de l'art, en particulier par rapport au dispositif selon la demande WO2015/113517, le principal avantage d'un système d'alimentation de poudre avec plaques de raclage mobiles selon l'invention est que celles-ci, peuvent avec leur mouvement de balayage, parcourir toute la surface intérieure du cône d'injection, atteignant tous les endroits possibles de formation de voûte ou arche entre la poudre cohésive et la paroi d'injection.

Un autre avantage est qu'un seul moteur suffit à entraîner l'ensemble des plaques de raclage.

On veille bien entendu à dimensionner tous les paramètres pour réaliser véritablement un dévoûtage ou encore un brise voûtes/arches de poudre dans le volume du cône d'injection qui reçoit la poudre depuis son ouverture supérieure et non un transport/convoyage assisté de la poudre qui se fait au contraire par gravité.

En particulier, les plaques peuvent être réalisées avec plus ou moins de rigidité en fonction du type de poudre à injecter.

Ainsi, avantageusement, les plaques peuvent être flexibles afin de pouvoir racler la paroi d'injection sur une plus grande surface.

De même, les dimensions de plaques et le pas entre deux plaques de raclage adjacentes, fixées sur le lien flexible peuvent être déterminés en fonction du diamètre du cône et des caractéristiques de la poudre.

La vitesse de balayage des plaques peut être variable, en fonction des caractéristiques de la poudre.

L'agencement des roues et des plaques définit :
- un espace libre minimal entre les plaques mobiles et la paroi du cône d'injection, de préférence avec un contact variable le long de la paroi, c'est-à-dire plus ou moins prononcé, la fonction recherchée étant la cassure de toute arche/voûte afin d'améliorer l'écoulement de la poudre.
- une surface de recouvrement maximale sur la surface intérieure du cône d'injection.

Le lien flexible continu peut être une chaîne ou une courroie.

De préférence, la roue d'entraînement est agencée dans la partie supérieure du cône d'injection, tandis que la roue entraînée est agencée dans la partie inférieure du cône d'injection, les axes de rotation des roues étant orthogonaux à l'axe du cône.

Selon un mode de réalisation avantageux, le système comprend au moins deux dispositifs de raclage adjacents agencés de telle sorte que les plaques de l'un des dispositifs puissent venir racler une partie de la surface de paroi tandis que celles de l'autre des dispositifs puissent venir racler une autre partie de la surface de paroi.

L'invention a également pour objet, selon un autre de ses aspects, une installation de conversion thermochimique comprenant un réacteur de gazéification agencé en aval du système décrit précédemment.

L'installation est particulièrement destinée à convertir de la poudre de biomasse, le réacteur étant un réacteur de type à flux entraîné.

L'invention est particulièrement avantageuse à mettre en oeuvre dans une installation de conversion thermochimique en réacteur à flux entrainé (RFE). En effet, les règles de sécurité dans ce type d'installation imposent de garantir une très grande stabilité du débit de poudre injectée.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes, parmi lesquelles :
- la figure 1 est une vue schématique en perspective d'un système d'alimentation en poudre cohésive selon l'invention ;
- la figure 2 est une vue de côté du système selon la figure 1;
- la figure 3 est une vue schématique en perspective d'un système d'alimentation en poudre cohésive selon un mode de réalisation avantageux de l'invention.

On précise ici dans l'ensemble de la présente demande, les termes « inférieur », « supérieur », « dessus », « dessous », « intérieur », « extérieur », « « interne » « externe» sont à comprendre par référence à un tronc de cône d'injection selon l'invention avec son axe agencé à la verticale avec l'entrée sur le dessus et la sortie sur le dessous.

On précise également que les termes « amont », « aval », « entrée », « sortie » sont à considérer par rapport au sens de circulation de la poudre dans le système selon l'invention.

Le système d'alimentation 1 en poudre en phase dense représenté en figures 1 et 2 comprend tout d'abord un injecteur 2 dont la paroi est sous la forme d'un tronc de cône d'injection.

La poudre tombe par gravité directement dans l'ouverture supérieure 20 du cône d'injection 2 et est destinée à s'écouler par l'ouverture inférieure 21 du cône d'injection 2.

Afin de casser/briser toute arche ou voûte de poudre à l'intérieur du cône d'injection 2, les inventeurs ont pensé à implanter à l'intérieur de celui-ci un dispositif de raclage 3 à plaques de raclage 30, destinée à être déplacées, depuis l'extérieur du cône 2.

Comme visible sur les figures, le dispositif 3 comprend des plaques de raclage 30 fixées à distance les unes des autres sur un lien flexible continu 31. Le pas entre deux plaques de raclage 30 afin de s'adapter au mieux aux caractéristiques de la poudre en écoulement gravitaire dans le cône d'injection 2

Le lien flexible continu 31 est enroulé autour d'une roue d'entraînement 32 agencée dans la partie supérieure du cône 2 et d'une roue entraînée 33 agencée dans la partie inférieure du cône 2.

La roue d'entraînement 32 est reliée à un moteur 4 par un arbre d'entraînement en rotation 40. Alternativement, on peut envisager que la roue d'entraînement soit celle dans la partie inférieure du cône 2 et donc le moteur 4 agencé également en bas du cône à l'extérieur de celui-ci.

Le fonctionnement du système 1 qui vient d'être décrit est le suivant.

Pendant que la poudre s'écoule par gravité depuis l'ouverture supérieure 20 jusqu'à l'ouverture inférieure 21 du cône 2, la roue d'entraînement 32 est mise en mouvement de rotation depuis l'extérieur par le biais de son arbre d'entraînement 40 relié au moteur externe 40.

L'agencement des roues 32, 33 et des plaques est tel qu'elles vont venir au plus près, voire balayer la paroi intérieure du cône d'injection 2 sur la hauteur de ce dernier. De cette manière, toutes les arches ou voûtes qui se forment entre la poudre cohésive et la paroi intérieure du cône d'injection sont brisées.

On obtient ainsi un écoulement par gravité de toute la poudre contenue dans le cône d'injection 2.

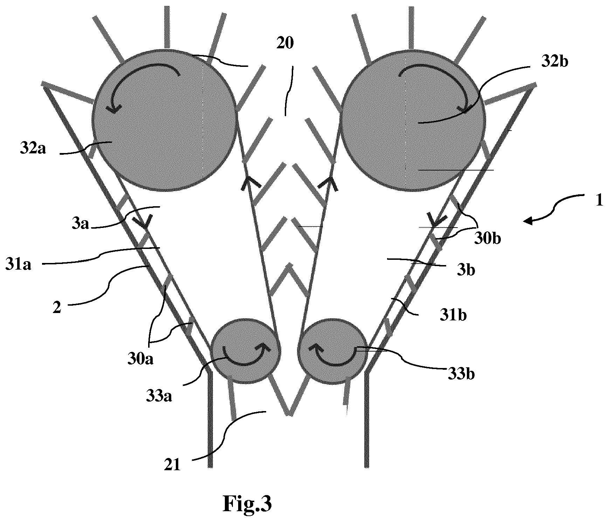

Un mode de réalisation avantageux d'un système d'alimentation 1 est montré en figure 3.

Selon ce mode, il est prévu deux dispositifs de raclage 1a, 1b adjacents au sein d'un même cône d'injection.

Tel qu'illustré, les roues d'entraînements 32a, 32b sont agencées également dans la partie supérieure du cône et les roues entraînées 33a, 33b dans la partie inférieure.

Les liens flexibles 31a, 31b déplacent les plaques de raclage 30a, 30b qui viennent balayer une partie de la surface de paroi intérieure pour un des dispositifs 3a et une autre partie de cette surface pour l'autre des dispositifs 3b.

De préférence, comme symbolisé par les flèches, la rotation des liens 31a, 31b et donc le balayage/raclage des plaques 30a, 30b se font dans le même sens.

Ce mode a pour principal avantage systèmes d'éviter à coup sûr que la poudre ne remonte pas le long de la paroi sous l'effet de balayage d'un seul groupe de plaques de raclage.

D'autres variantes et avantages de l'invention peuvent être réalisés sans pour autant sortir du cadre de l'invention.

Si dans l'application préférée envisagée, la poudre qui s'écoule depuis le cône d'injection est injectée directement dans un réacteur, on peut envisager un écoulement intermédiaire par gravité depuis le cône qui peut aussi constituer alors uniquement un cône de stockage.

L'invention n'est pas limitée aux exemples qui viennent d'être décrits; on peut notamment combiner entre elles des caractéristiques des exemples illustrés au sein de variantes non illustrées.

### Références citées

*[1]: "*Pneumatic convection of solids", KLINGZING, G.E., RIZK, F., MARCUS, R. & LEUNG, L.S., third édition, 2010.
*[2]: "*Pneumatic conveying design guide", MILLS, D, Elsevier, 2006.
*[3]: "*Powders and Bulk Solids: Behavior, Characterization, Storage and Flow." D. Schulze, Springer Science & Business Media, 2007.

## Revendications

1. Système (1) d'alimentation en poudre en phase dense comportant :
- une paroi d'injection (2) par gravité de la poudre, sous la forme d'un tronc de cône,
- au moins un dispositif de de raclage (3) de la paroi comprenant :
• une pluralité de plaques (30) fixées à un lien flexible continu (31) ;
• deux roues (32, 33) dont au moins une (32) d'entraînement en rotation depuis l'extérieur de la paroi d'injection, autour desquelles le lien flexible continu est enroulé pour être entraîné, les roues étant agencées au moins en partie à l'intérieur du cône d'injection; de sorte que lorsque la roue d'entraînement est mise en rotation, les plaques entraînées par le lien flexible puissent venir racler au moins en partie la paroi et casser les voûtes de poudre injectée, susceptibles de se former sur la hauteur du cône d'injection entre l'intérieur de ce dernier et la paroi.

2. Système d'alimentation (1) selon la revendication 1, les plaques étant flexibles.

3. Système d'alimentation (1) selon la revendication 1 ou 2, le lien flexible continu étant une chaîne ou une courroie.

4. Système d'alimentation (1) selon l'une des revendications précédentes, la roue d'entraînement étant agencée dans la partie supérieure du cône d'injection, la roue entraînée étant agencée dans la partie inférieure du cône d'injection, les axes de rotation des roues étant orthogonaux à l'axe du cône.

5. Système d'alimentation (1) selon l'une des revendications précédentes, comprenant au moins deux dispositifs de raclage (3a, 3b) adjacents agencés de telle sorte que les plaques de l'un des dispositifs puissent venir racler une partie de la surface de paroi tandis que celles de l'autre des dispositifs puissent venir racler une autre partie de la surface de paroi.

6. Installation de conversion thermochimique comprenant un réacteur de gazéification agencé en aval du système selon l'une quelconque des revendications précédentes.

7. Installation selon la revendication 6, destinée à convertir de la poudre de biomasse, le réacteur étant un réacteur de type à flux entraîné.
